Europäisches Patentamt

European Patent Office

Office européen des brevets

(11) Veröffentlichungsnummer: **0 299 290**

**A1**

# EUROPÄISCHE PATENTANMELDUNG

(21) Anmeldenummer: 88110460.8

(22) Anmeldetag: 30.06.88

(51) Int. Cl.4: **A01B 29/04** , **A01B 29/06** , **B60C 17/10**

(30) Priorität: 17.07.87 DE 3723663

(43) Veröffentlichungstag der Anmeldung:
18.01.89 Patentblatt 89/03

(84) Benannte Vertragsstaaten:
DE FR GB IT NL

(71) Anmelder: **Amazonen-Werke H. Dreyer GmbH & Co. KG**
**Am Amazonenwerk 9-13**
**D-4507 Hasbergen-Gaste(DE)**

(72) Erfinder: **Siefken, Claus**
**Preussenweg 27**
**D-2872 Hude 1(DE)**

(54) **Bodenwalze.**

(57) Bodenwalze, insbesondere Nachlaufwalze hinter einer Bodenbearbeitungsmaschine und/oder Fahrwerk einer Drillmaschine, mit nebeneinander auf einem Traggerüst drehbar angeordneten Gummireifen, wobei im Inneren der Gummireifen zwischen dem Traggerüst und dem Bereich der Lauffläche des Reifens ein oder mehrere Stützkörper zum Abstützen der Lauffläche angeordnet sind, wobei diese Stützkörper einen kleineren Durchmesser im Vergleich zu dem inneren Laufflächendurchmesser aufweist, wobei die Innenfläche der Lauffläche des Reifens beim Abrollen auf dem Boden auf den Stützkörpern sich abstützt und/oder zur Anlage kommt. Um die Lebensdauer und Funktionsfähigkeit der gattungsgemäßen Bodenwalze wesentlich zu verbessern, ist vorgesehen, daß sich im Reifeninneren ein Schmiermittel (27) zur Verringerung der Reibung zwischen Stützkörper (16) und Innenfläche (28) der Lauffläche (29) des Reifens (9) befindet.

FIG.3

EP 0 299 290 A1

## Bodenwalze

Die Erfindung betrifft eine Bodenwalze gemäß des Oberbegriffes des Patentanspruches 1.

Eine derartige Bodenwalze ist durch den Prospekt "AMAZONE-DRILL-STAR die Reifenpacker-Drillmaschine" bekannt. Diese Bodenwalze hat sich bereits in der Praxis bewährt.

Aufgrund der unterschiedlichen Durchmesser von den Stützkörpern, die innerhalb der Reifen angeordnet sind, und der Innenfläche der Lauffläche des Reifens tritt eine Relativbewegung zwischen den Stützkörpern und der Innenfläche der Lauffläche des Reifens auf. Hierdurch besteht die Gefahr, daß die Lauffläche des Reifens von innen her verschleißt und durchscheuert.

Der Erfindung liegt die Aufgabe zugrunde, die Lebensdauer und Funktionsfähigkeit der gattungsgemäßen Bodenwalze wesentlich zu verbessern.

Diese Aufgabe wird erfindungsgemäß dadurch gelöst, daß sich im Reifeninneren der Reifen der Bodenwalze ein Schmiermittel zur Verringerung der Reibung zwischen Stützkörper und Innenfläche der Lauffläche des Reifens befindet. Infolge dieser Maßnahme wird die Reibung zwischen Stützkörper und Innenfläche der Lauffläche erheblich reduziert. Es tritt an der Innenfläche der Lauffläche des Reifens kein nennenswerter Verschleiß mehr auf bzw. nur noch ein derart geringer Verschleiß, der in der Praxis in Kauf genommen werden kann. Die Lebensdauer oder Reifen wird erheblich erhöht.

In einer Ausführungsform ist vorgesehen, daß als Schmiermittel ein in der Reifenbranche verwendetes Mittel, wie beispielsweise "Talkum" verwendet wird. Weiterhin ist in einer anderen Ausführungsform der Erfindung vorgesehen, daß als Schmiermittel "Schmierseife" verwendet wird. In bevorzugter Weise ist vorgesehen, daß das Schmiermittel ein Gemisch aus Schmierseife, Wasser und Frostschutz ist, wodurch sichergestellt ist, daß auch noch bei Temperaturen unter 0° C gearbeitet werden kann. Hierbei kann das Gemisch aus 50% Schmierseife, 25% Wasser und 25% Frostschutz mit Korrosionsschutz bestehen.

Die Erfindung wird im folgenden anhand eines Ausführungsbeispieles näher erläutert. Hierbei zeigen

Fig. 1 eine Gerätekombination mit einer erfindungsgemäßen Bodenwalze in der Seitenansicht,

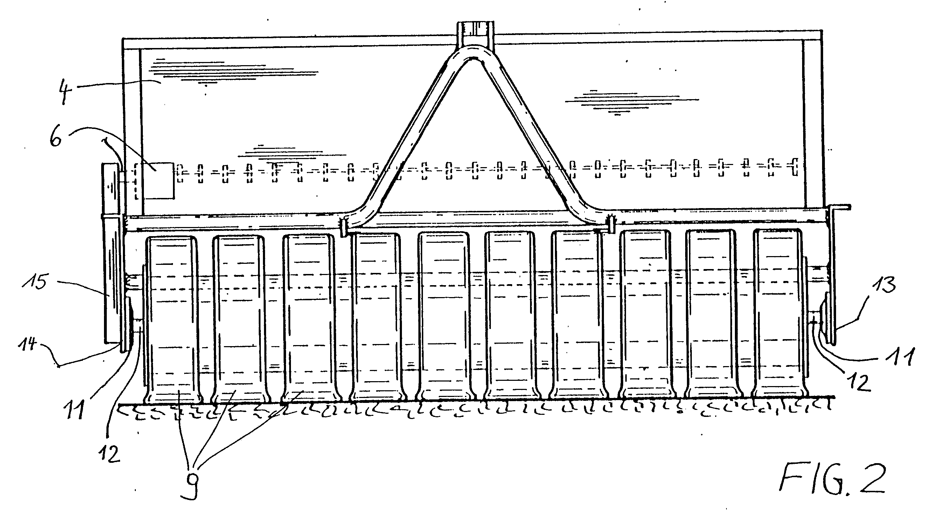

Fig. 2 die Bodenwalze in der Ansicht II-II mit aufgebauter Sämaschine und

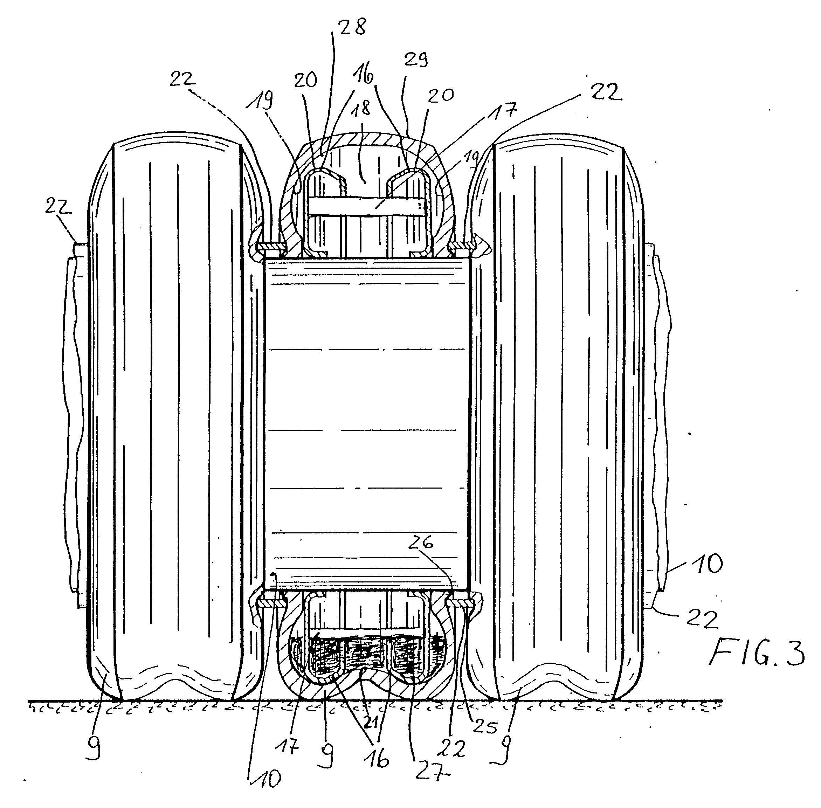

Fig. 3 die Bodenwalze in der Ansicht von hinten ausschnittsweise und teilweise im Schnitt.

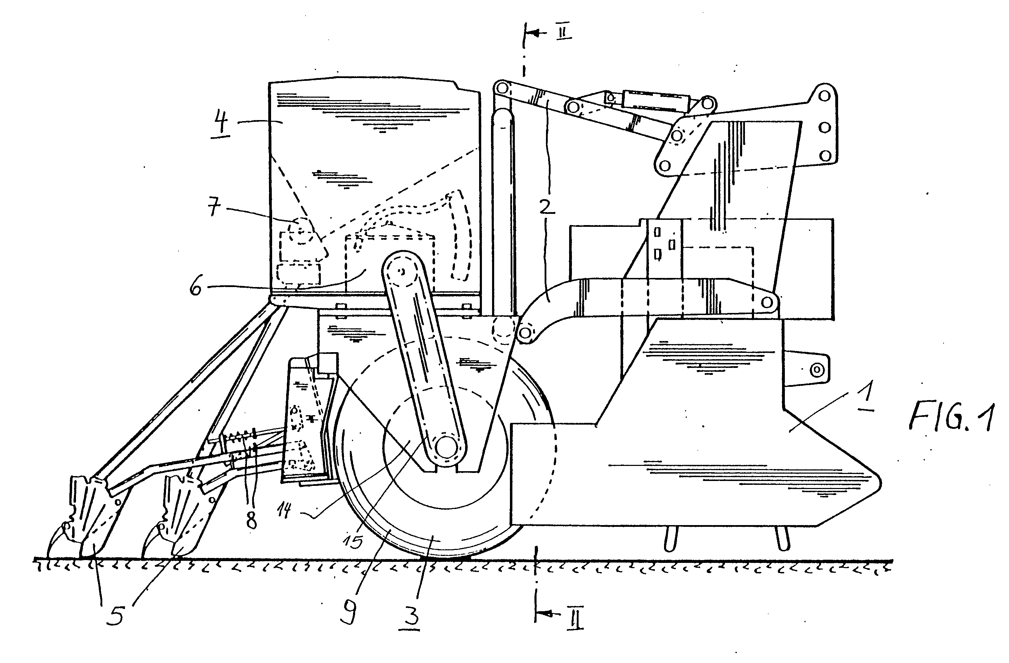

Die Fig. 1 zeigt eine landwirtschaftliche Gerätekombination, die aus der schleppergetriebenen Bodenbearbeitungsmaschine 1 und der hinter der Bodenbearbeitungsmaschine 1 über das Dreipunktgestänge 2 angeordneten Bodenwalze 3 mit der aufgesattelten Drillmaschine 4 besteht. Die Bodenwalze 3 ist somit als Nachlaufwalze hinter der Bodenbearbeitungsmaschine 1 und gleichzeitig als Fahrwerk für die Drillmaschine 4 ausgebildet. Die Drillmaschine 4 weist die Säschare 5, die in zwei hintereinanderliegenden Querreihen ange- ordnet sind auf. Von der Bodenwalze 3 aus werden über den regelbaren Antrieb 6 die Dosierorgane 7 der Drillmaschine 4 angetrieben. Die Säschare 5 werden durch die Schardruckfedern 8 gegen den Boden gedrückt.

Die Bodenwalze 3 besteht aus den nebeneinander angeordneten Gummireifen 9, die auf den drehbar gelagerten Traggerüst 10 angeordnet sind. Das Traggerüst 10 ist als Tragrohr ausgebildet, welches über die Lager 11 und die Lagerzapfen 12 an den seitlichen Tragarmen 13 und 14 drehbar angeordnet ist, wobei der Tragarm 14 als Lagergehäuse für den Antrieb 15 des Regelgetriebes 6 ausgebildet ist.

Auf dem durchgehenden Tragrohr 10 sind die Gummireifen 9 nebeneinander angeordnet. Das Tragrohr 10 weist einen Außendurchmesser auf, der in etwa dem Innendurchmesser der Gummireifen 9 entspricht. Somit sind also die Gummireifen 9 sehr einfach auf dem Tragrohr 10 von der einen Seite her aufzuschieben. An der einen Seite des Tragrohres 10 ist ein Stirnring mittels einer als Spannvorrichtung ausgebildeten Schraube anzuordnen. Auf der anderen Seite des Tragrohres 10 ist eine Stirnwand an der Stirnfläche des Tragrohres angeschweißt. Der Außendurchmesser der Stirnwände ist größer als der Außendurchmesser des Tragrohres 10, so daß der überstehende Ring der Stirnwand als Anlagefläche für den Wulst der Reifen dient.

In dem Innern der Gummireifen 9 sind jeweils die beiden Abstützringe 16 in einem Abstand zueinander angeordnet. Die Abstützringe 16 weisen einen Außendurchmesser auf, der kleiner ist als der Innendurchmesser der Lauffläche der Gummireifen 9. Die beiden Abstützringe 16 sind durch drei Abstandshalter 17 miteinander verbunden und auf Abstand zueinander angeordnet. In jedem Gummireifen 9 sind zwei über die Abstandshalter 17 miteinander verbundene Abstützringe 16 angeordnet. Die Abstützringe 16 sind in einem Abstand zueinander angeordnet, so daß zwischen den Abstützringen 16 in deren radialen Außenbereich sich der freie umlaufende Freiraum 18 befindet. Die Abstützringe sind dicht neben der Innenwand 19 des Reifens 9 angeordnet. Die Abstützringe 16 bestehen aus den drei zusammengesetzten Teilen, die nach der Montage innerhalb des Reifens miteinander verschweißt werden. Die Abstützringe 16 weisen auf ihrer Außenseite 20 eine abgerundete Abstützfläche auf. Die Abstützringe 16 bestehen aus geformten Blechteilen.

Der Abstand A zwischen den beiden innerhalb des Gummireifens 9 angeordneten Abstützringen 16 ist derart groß, daß die mittlere Lauffläche 21 des Reifens 9 in den Freiraum 18 zwischen diesen beiden Abstützringen 16 sich nach innen zumindest etwas hineindrücken kann.

Hinter der Bodenwalze 3 sind die Säschare 5 derart angeordnet, daß jeweils ein Säschar 5 in Verlängerung, entgegen der Fahrtrichtung gesehen, eines Abstützringes 16, der im Inneren der Gummireifen 9 angeordnet ist, sich befindet. Zwischen den Reifen 9 sind jeweils die Zwischenstücke 22 angeordnet. Durch Zwischenstücke 22 und durch die durch die Abstandshalter 17 auf Abstand gehaltenen Abstützringe 16 wird sichergestellt, daß die Gummireifen 09 in einem ganz bestimmten und fixierten Abstand zueinander auf dem Tragrohr 10 angeordnet sind. Dadurch, daß durch die beiden äußeren Stirnwände 23 und 24 die Gummireifen 9 über die Zwischenringe 22 gegeneinander gedrückt werden, wird sichergestellt, daß kein Erdreich in das Innere der Gummireifen 9 eindringen kann, da der Innenraum der Gummireifen durch das Gegeneinanderpressen der Gummireifen gegen die Zwischenstücke 22, die als Ringe ausgebildet sind, abgedichtet wird.

Die Zwischenringe 22 weisen einen derartigen Durchmesser und eine derartige Größe auf, daß sie in den Wulsteinschnitt 25 der Gummireifen 9 einfassen und so eine sichere Befestigung und ein sicheres Festklemmen der Gummireifen 9 auf dem Tragrohr 10 in jedem Falle, selbst bei Kurvenfahrten, gewährleisten. Damit das Festklemmen der Gummireifen durch die Zwischenringe 22 und durch die Abstützringe 16 noch besser gewährleistet werden kann, ist der sich gegenüber dem Außenwulst 26 auf der Innenseite befindende Innenwulst mit geeigneten Mitteln herausgeschnitten, so daß sich auf der Innenseite des Reifens 9 gegenüber dem Außenwulst 26 eine ebene Fläche ergibt. Hierdurch wird ein sicheres Festklemmen der Gummireifen 9, welche herkömmliche und gebrauchte PKW-Reifen in bevorzugter Weise sind, erreicht.

In dem Reifeninneren befindet sich das Schmiermittel 27 zur Verringerung der Reibung zwischen den Stützkörpern 16 und der Innenfläche 28 der Lauffläche 29 des Reifens 9. Dieses Schmiermittel 27 ist ein Gemisch aus Schmierseife, Wasser und Frostschutzmittel mit einem Korrosinsschutzmittel. Dieses Gemisch besteht etwa aus 50% Schmierseife, 25% Wasser und 25% Frostschutzmittel mit Korrosionsschutzmittel. An Stelle dieses Gemisches kann jedoch auch ein in der Reifenbranche übliches Trockenschmiermittel, wie beispielweise "Talkum", verwendet werden.

## Ansprüche

1. Bodenwalze, insbesondere Nachlaufwalze hinter einer Bodenbearbeitungsmaschine und/oder Fahrwerk einer Drillmaschine, mit nebeneinander auf einem Traggerüst drehbar angeordneten Gummireifen, wobei im Inneren der Gummireifen zwischen dem Traggerüst und dem Bereich der Lauffläche des Reifens ein oder mehrere Stützkörper zum Abstützen der Lauffläche angeordnet sind, wobei diese Stützkörper einen kleineren Durchmesser im Vergleich zu dem inneren Laufflächendurchmesser aufweist, wobei die Innenfläche der Lauffläche des Reifens beim Abrollen auf dem Boden auf den Stützkörpern sich abstützt und/oder zur Anlage kommt, dadurch gekennzeichnet, daß sich im Reifeninneren ein Schmiermittel (27) zur Verringerung der Reibung zwischen Stützkörper (16) und Innenfläche (28) der Lauffläche (29) des Reifens (9) befindet.

2. Bodenwalze nach Anspruch 1, dadurch gekennzeichnet, daß das Schmiermittel "Talkum" ist.

3. Bodenwalze nach Anspruch 1, dadurch gekennzeichnet, daß das Schmiermittel Schmierseife ist.

4. Bodenwalze nach Anspruch 1, dadurch gekennzeichnet, daß das Schmiermittel ein Gemisch aus Schmierseife, Wasser und Frostschutz ist.

5. Bodenwalze nach Anspruch 4, dadurch gekennzeichnet, daß das Gemisch aus 50% Schmierseife, 25% Wasser und 25% Frostschutz mit Korrisbsschutzsteht.

FIG.1

EP 0 299 290 A1

FIG.2

FIG.3

EP 0 299 290 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-2 074 955 (UNIROYAL ENGLEBERT REIFEN) <br> * Seite 1, Zeilen 58-76; Figuren 1,2 * <br> --- | 1 | A 01 B 29/04 <br> A 01 B 29/06 <br> B 60 C 17/10 |
| X | US-A-4 091 854 (DUNLOP HOLDINGS LTD) <br> * Spalte 5, Zeilen 28-34,49,50; Figur 12 * <br> --- | 1,2 | |
| X | US-A-3 946 783 (DUNLOP LTD) <br> * Spalte 4, Zeilen 9-20 * | 1,3,4 | |
| A | ----- | 5 | |

**RECHERCHIERTE SACHGEBIETE (Int. Cl.4)**

A 01 B
B 60 C

Der vorliegende Recherchenbericht wurde für alle Patentansprüche erstellt

| Recherchenort | Abschlußdatum der Recherche | Prüfer |
|---|---|---|
| DEN HAAG | 24-10-1988 | VON ARX V.U. |

**KATEGORIE DER GENANNTEN DOKUMENTE**

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...............................................................................
& : Mitglied der gleichen Patentfamilie, übereinstimmendes
    Dokument